(19)

Europäisches
Patentamt
European
Patent Office
Office européen
des brevets

(11) **EP 2 957 930 A1**

(12) **EUROPEAN PATENT APPLICATION**
published in accordance with Art. 153(4) EPC

(43) Date of publication:
**23.12.2015 Bulletin 2015/52**

(51) Int Cl.:
**G01V 3/02** (2006.01)

(21) Application number: **14751135.6**

(22) Date of filing: **04.02.2014**

(86) International application number:
**PCT/JP2014/000574**

(87) International publication number:
**WO 2014/125787 (21.08.2014 Gazette 2014/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.02.2013 JP 2013028734**

(71) Applicants:
- **Oyo Corporation**
  **Tokyo 101-8486 (JP)**
- **B.R.G.M.-BUREAU DE RECHERCHES GEOLOGIQUES ET MINIERES**
  **75739 Paris Cedex 15 (FR)**

(72) Inventors:
- **YAMASHITA, Yoshihiro**
  **Tokyo 101-8486 (JP)**
- **SHIMA, Hiromasa**
  **Tokyo 101-8486 (JP)**
- **SANO, Kou**
  **Tokyo 101-8486 (JP)**

(74) Representative: **Klingseisen, Franz**
**Klingseisen & Partner**
**Postfach 10 15 61**
**80089 München (DE)**

(54) **DISTRIBUTED SURVEY SYSTEM FOR OBTAINING UNDERGROUND ELECTRICAL CHARACTERISTICS AND DISTRIBUTED SURVEY METHOD USING SAME**

(57)     There are provided a distributed survey system for obtaining underground electrical characteristics and a distributed survey method using the same which can be flexibly compatible with the survey purposes, the geographical conditions of the survey region, etc. and which can obtain the underground electrical characteristics more efficiently in a shorter time. In the invention, survey units (1, 2, 3,...(N-1), N) are distributed across a region in which underground electrical characteristics are to be obtained. Each survey unit includes at least one current supply point TX and a current supply device for supplying a current underground from the relevant current supply point TX; and/or at least one measurement point RX and measurement device for measuring a response signal in response to the current supply from each measurement point RX, and synchronization control device which is disposed in each of the survey units for exerting control to supply currents with waveforms encoded so as to yield covariances of zero from the current supply points, and controlling the measurement device to measure the response signals in response to the relevant current supply, while synchronizing operation of the current supply means with operation of the measurement device.

FIG. 1

**Description**

Technical Field

The present invention relates to a distributed survey system and a distributed survey method using the same which are used in analyzing underground electrical characteristics in various survey methods such as a resistivity method, an induced polarisation method (IP method) and an electromagnetic method.

Background Art

As is well known, the soil in which the clay content is large has a smaller resistivity value than the soil in which the sand content is large. Moreover, the soil in which the water content is larger has a smaller resistivity value. Due to this, the underground situations can be estimated by knowing the electrical characteristics there.

Therefore, conventionally, various survey methods are put into practical use for obtaining underground electrical characteristics by providing a current supply point and a measurement point on the ground surface or underground, allowing a current with a predetermined amplitude to flow from the current supply point, and measuring a response potential thereof, a magnetic field response in response to the current supply or the like at the measurement point.

Meanwhile, in this kind of survey method, the electrical characteristics at a deeper position from the ground surface are obtained as the distance between the current supply point and the measurement point is larger. Due to this, in order to accurately grasp the underground electrical characteristics, there are many cases in which the current supply from only one current supply point is insufficient. Typically, therefore, a method of survey of the underground electrical characteristics is employed in a predetermined depth range, in which method the current is allowed to flow with the current supply point moved to a plurality of places or the current is supplied from other places by changing the connection of the cables, so that the survey depth is changed.

However, in such a conventional survey method in which a plurality of times of current supply are performed, the operation efficiency is exceedingly poor. Particularly when the underground electrical characteristics should be obtained across a wide range, the operation problematically takes a long time. Due to this, in order to reduce the measurement time, as a method of multi-point simultaneous current supply, a technology of the frequency division multiple access (FDMA) type has been attempted in which different current supply frequencies are used for respective current supply time points. Nevertheless, its survey accuracy is problematic because underground electrical characteristics have frequency dependency.

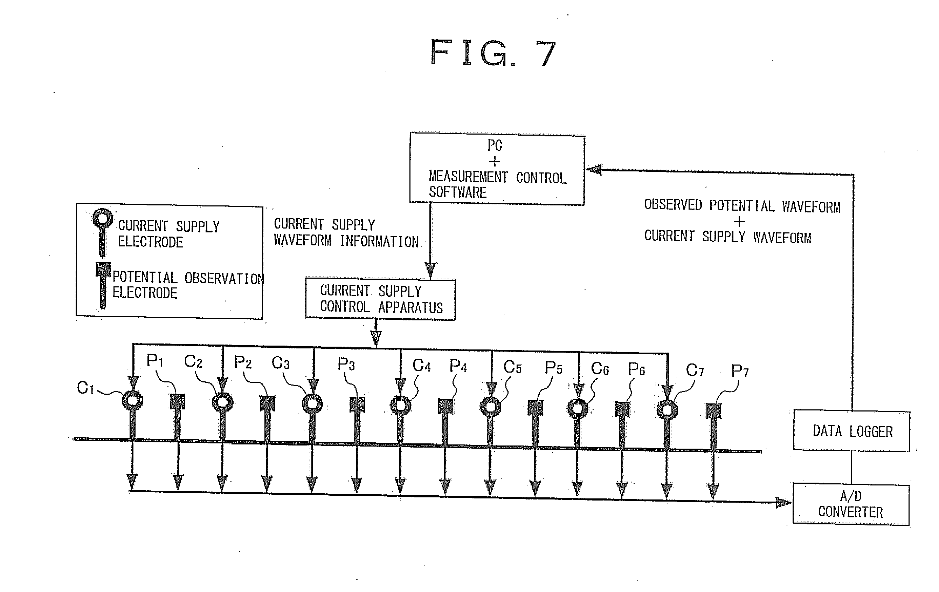

In order to solve such problems, in Patent Literature 1 below, a measurement method is proposed in which currents with different current supply waveforms are simultaneously supplied from a plurality of current supply points, and from potential waveforms observed at separately provided potential measurement points, the responses in the case where the current is solely supplied at an arbitrary current supply point are separated based on the arithmetic processing in the electrical resistivity survey method and the electrical resistivity logging method. As illustrated in Figure 7, in this method, a plurality of (seven in the figure) current supply points $C_1$ to $C_7$ and a plurality of (same as above) potential measurement points $P_1$ to $P_7$ are provided in a survey target region, and as current supply waveforms from the current supply points $C_1$ to $C_7$, the waveforms are used which are encoded so as to yield covariances of zero between the current supply waveforms.

According to the measurement method, the waveforms with which the covariances between the current supply waveforms become zero, such as M-series codes, are selected and the currents are supplied. From the potential waveforms observed at the potential measurement points $P_1$ to $P_7$, the responses per unit current can be thereby easily obtained, which is a merit that the measurement time can be largely reduced, leading to good operation efficiency.

Citation List

Patent Literature

Patent Literature 1: Japanese Patent Laid-Open No. 2008-304343

Summary of Invention

Technical Problem

However, in the conventional measurement method, after all of the current supply points $C_1$ to $C_7$ and the potential measurement points $P_1$ to $P_7$ are installed, current supply to the current supply points $C_1$ to $C_7$ and measurement at the potential measurement points $P_1$ to $P_7$ are controlled at one place to be performed. Hence, in real survey, in the case where the current supply points $C_1$ to $C_n$ are installed across a wide range and/or the case where obstacles such as a mountainous area and a lake are present between the current supply points $C_1$ to $C_n$ in particular, standby time until the installation operation completes entirely is long, which conversely, problematically lowers survey efficiency and causes severe difficulty in the measurement operation. Furthermore, exceedingly long cables are needed, which is far from practical.

Moreover, in the measurement method, since the supply currents and the potential waveforms are measured in one time window, measurement in the induced polarization method (IP method) or the electromagnetic method cannot be performed, problematically, although the measurement in the resistivity method can be performed.

The present invention has been achieved in view of the above-mentioned circumstances and an object thereof is to provide a distributed survey system for obtaining underground electrical characteristics and a distributed survey method using the same which can be flexibly compatible with the survey purposes, the geographical conditions of the survey region and the like, and therefore, can obtain the underground electrical characteristics more efficiently and in a shorter time than conventionally, and which can be compatible with the induced polarization method, the electromagnetic method and the like as well as the resistivity method.

Solution to Problem

In order to solve the above-mentioned problems, there is provided a distributed survey system according to a first aspect (according to Claim 1) of the present invention for obtaining underground electrical characteristics, characterized in that a plurality of survey units are distributed across a region in which underground electrical characteristics are to be obtained, each survey unit including at least one current supply point and current supply means for supplying a current underground from the relevant current supply point; and/or at least one measurement point and measurement means for measuring a response signal in response to the current supply from each measurement point, and synchronization control means is disposed in each of the survey units, the synchronization control means exerting control to supply currents with waveforms encoded so as to yield covariances of zero from the plurality of current supply points, and controlling the measurement means to measure the response signals in response to the relevant current supply, while synchronizing operation of the current supply means with the measurement means.

Moreover, in the invention according to the first aspect, a second aspect (according to Claim 2) of the present invention is characterized in that the synchronization control means controls, at least after the current supply means in at least one of the survey units completes the current supply and current shutoff for a unit transmission period, the current supply means in another of the survey units to perform current supply operation.

There is provided a distributed survey method according to a third aspect (according to Claim 3) of the present invention for obtaining underground electrical characteristics, characterized in that using the distributed survey system according to the first or second aspect for obtaining electrical characteristics, the current supply means and the measurement means which are synchronized by the synchronization control means obtain the underground electrical characteristics in a resistivity method, an induced polarization method or an electromagnetic method.

Moreover, in the invention according to the third aspect, a fourth aspect (according to Claim 4) of the present invention is characterized in that the currents with different amplitudes are supplied from at least two of the current supply points of the survey units, and using a current value multiplied by a ratio of the amplitude of a specific one of the currents to the amplitude of another of the currents and potential values measured with respect to the respective currents at the measurement points, the underground electrical characteristics are obtained in the resistivity method.

Furthermore, in the third aspect, a fifth aspect (according to Claim 5) of the present invention is characterized in that with respect to a plurality of times of the current supply and the current shutoff performed for the unit transmission period, a covariance value $Cik(A)$ between the current value and a measured voltage in the relevant current supply of the current supply and the current shutoff is obtained at each time of the current supply and the current shutoff, supposing that the current supply is being performed although the actual current is shutoff, a covariance value $Cih(B)$ between the current value and the measured voltage is obtained, the covariance values $Cik(A)$ and $Cik(B)$ are added together across an entire section in the unit transmission period, and an index $Mi$ of an IP effect in the induced polarization method is obtained from a ratio $Ci(B)/Ci(A)$ between the obtained covariance values.

Advantageous Effects of Invention

According to the distributed survey system according to the first or second aspect of the present invention for obtaining underground electrical characteristics and the distributed survey method according to any of the third to fifth aspects using the same, the currents with the waveforms so as to yield the covariances of zero between the current supply waveforms are supplied from the plurality of current supply points. Therefore, from the response potential waveforms observed at the plurality of measurement points, the responses with respect to the currents from the respective current supply points can be easily obtained. As a result, the measurement time can be remarkably reduced, leading to excellent operation efficiency.

In addition to this, according to the present invention, the plurality of survey units are distributed across a region in which underground electrical characteristics are to be obtained, each survey unit including: at least one current supply point and the current supply means for supplying the current underground from the relevant current supply point; and/or at least one measurement point and the measurement means for measuring the response signal in response to the current supply from each measurement point, and the current supply means and the measurement means of the plurality of survey units are synchronized by the synchronization control means to be operated. Hence, even in the case where underground electrical characteristics are surveyed across a wide range and the case where there are obstacles such as a mountainous area and a lake in the survey region, the relevant region can be surveyed with the survey units being simultaneously installed.

According to the invention described above, the underground electrical characteristics in a wide-range region can be efficiently surveyed in a short time, excluding a wasteful standby time.

In addition to this, suitable selection of the configuration and arrangement of each survey unit can properly and flexibly respond to the survey purposes, the geographical conditions in the survey region and the like.

Moreover, when the plurality of survey units are distributed across a wide-range region to perform measurement, for example, there can arise a case where the ground resistances are largely different across the disposition region, and as a result, a large current cannot be allowed to flow through a current supply point depending on the disposition place. Moreover, since each survey unit can be independently configured, there can also be supposed a case where current values which can be supplied are different between the current supply means.

In such a case, according to the fourth aspect of the present invention, the currents with different amplitudes are supplied from the current supply points of the survey units, the differences between the current values are compensated, and then, the covariances between those and the measured potential waveforms are obtained. Thus, similar to the case where the currents with the same amplitude are allowed to flow from all of the current supply points, the underground electrical characteristics in the resistivity method can be obtained.

Furthermore, according to the fifth aspect of the present invention, also in a case when the currents with waveforms encoded so as to yield the covariances of zero are supplied from the plurality of current supply points, by taking account of the response waveforms of the voltages after the current shutoff with respect to each of the plurality of times of the current supply and the current shutoff performed in the unit transmission period, the index for evaluating the charging rate can be calculated. Therefore, the IP effect which is one of the underground electrical characteristics can also be evaluated.

As a result, as well as the resistivity method using the currents with the same amplitude as conventional, the resistivity method, the induced polarization method, the electromagnetic method and the like in which the currents with different amplitudes are allowed to flow can also be handled. Therefore, various underground electrical characteristics can be surveyed.

Brief Description of Drawings

[Figure 1] Figure 1 is a schematic configuration diagram illustrating an embodiment of a distributed survey system according to the present invention.
[Figure 2] Figure 2 is a time chart illustrating the case where currents are supplied using a plurality of survey units with time differences provided in the distributed survey system of Figure 1.
[Figure 3] Figure 3 is a diagram illustrating comparison results of the case where currents with the same amplitude are supplied to a plurality of current supply points and the case where currents with different amplitudes are supplied thereto in the distributed survey system of Figure 1.
[Figure 4] Figure 4 is a conceptual diagram illustrating an arithmetic method in the conventional induced polarization method.
[Figure 5] Figure 5 is a time chart illustrating a current supply waveform for a unit transmission period and a response voltage waveform in the embodiment.
[Figure 6] Figure 6 is a conceptual diagram illustrating a method of calculating the index of the IP effect in the induced polarization method from the current supply waveform and the response voltage waveform in Figure 5.
[Figure 7] Figure 7 is a schematic configuration diagram illustrating a conventional measurement method.

Description of Embodiments

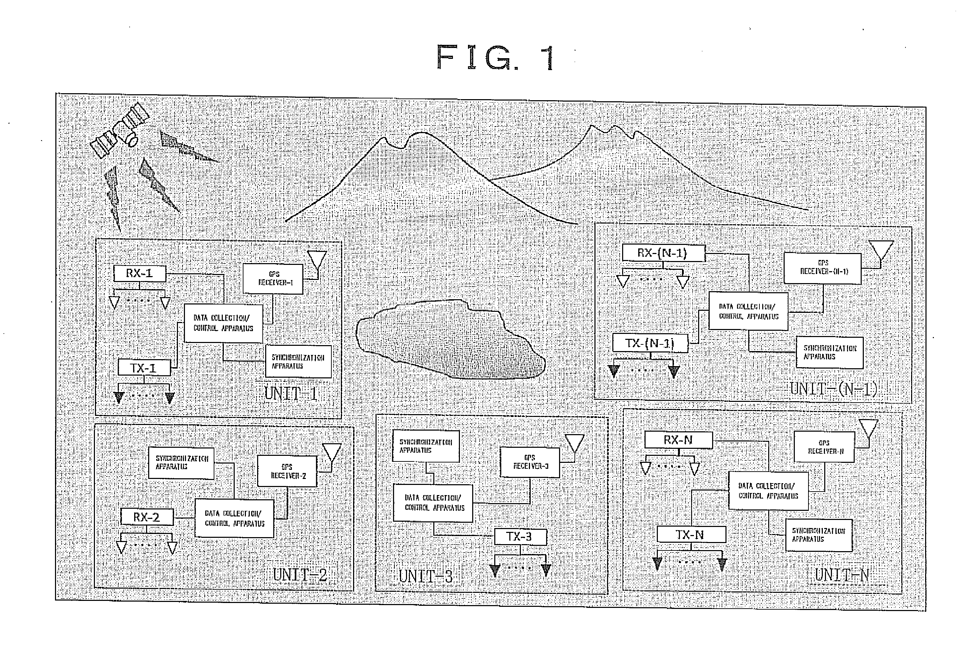

Figure 1 illustrates an embodiment of a distributed survey system according to the present invention for obtaining underground electrical characteristics.

The distributed survey system is configured by distributing a plurality of survey units (1, 2, 3,...(N-1), N) across a region required for obtaining wide-range or deeply-underground electrical characteristics. Herein, each survey unit includes any one or both of: at least one current supply point TX installed on the ground surface or underground and current supply means for supplying a current underground from the relevant current supply point TX; and at least one measurement point RX installed similarly on the ground surface or underground and measurement means for measuring a response signal in response to the current supply from each measurement point RX.

Notably, in Figure 1, the survey unit 2 includes only the measurement point RX and its measurement means, and the survey unit 3 includes only the current supply point TAX and its current supply means.

In each of all of the survey units (1, 2, 3,...(N-1), N), there is provided synchronization control means composed of a synchronization apparatus, data collection/control apparatus and the like, the synchronization control means exerting control to supply currents with waveforms encoded so as to yield covariances of zero from the plurality of current supply points TX, and controlling the measurement means to measure the response signal in response to the current supply, while synchronizing an operation of the current supply means with that of the measurement means.

Herein, when the synchronization control means performs operations of the current supply point TX and the measurement point RX of the survey units (1, 2, 3,...(N-1), N), the currents may be simultaneously supplied from the current supply points TX of all of the survey units with the measurements at the measurement points RX simultaneously performed. Nevertheless, after the current from the current supply point TX of at least one survey unit is first supplied, the current from the current supply point TX of another survey unit can be supplied.

In this stage, the most noticeable requirement is that the current supply from each of the survey units be correctly timed. Namely, it is needed that, in the midway of supplying the current from a survey unit, the current from another survey unit be prevented from being supplied. It should be noted that to supply the current in the midway means, for example, that in the case where an encoded current waveform is repeatedly supplied from one survey unit several times, the current is supplied from another survey unit before the current supply and the current shutoff in a unit transmission period at least complete.

In other words, the current supply in any survey unit can be performed at an arbitrary time as long as it does not starts other than at an interval between the unit transmission periods in another survey unit.

In this way, as a method of correctly maintaining the timing of the current supply starting time, there can be adopted a method in which each of the survey units (1, 2, 3,...(N-1), N) correctly measures the time, and thereby, its own synchronization function measures the timing for activation or a method in which a signal which is a reference is sent from a certain point and each of the units recognizes the timing for current supply with reference to the signal. Moreover, as a method of correctly measuring the time, for example, illustrated in Figure 1, there can be adopted a method of using the GPS signals, and a method in which each of the survey units is implemented with an accurate clock to be referred to.

As mentioned above, in order not to supply the currents between the survey units overlappingly in the midway of the unit current transmission period, in the case of using the reference signal, there can be adopted a method in which the currents are supplied with synchronization with the reference signal. Moreover, in the method of using the accurate time, for example, it can be achieved by beforehand providing a trigger function that the activation only at a defined time interval is allowed for the survey units such that the current supply starting times do not overlap with the midways of the unit current transmission periods of individual survey units.

Furthermore, even in the case where the relevant function is not included, it can also be realized by allowing the survey units to communicate therewith such that the current supply does not overlap therebetween or by predefining rules for the current supply time. In any of these cases, it should be noted that the time when the current is supplied from each current supply point TX and the time when the potential waveform is measured at the measurement point RX are needed to be recorded.

Next, an embodiment of a distributed survey method according to the present invention for measuring the underground response potential in the resistivity method using the distributed survey system having the configuration above is described.

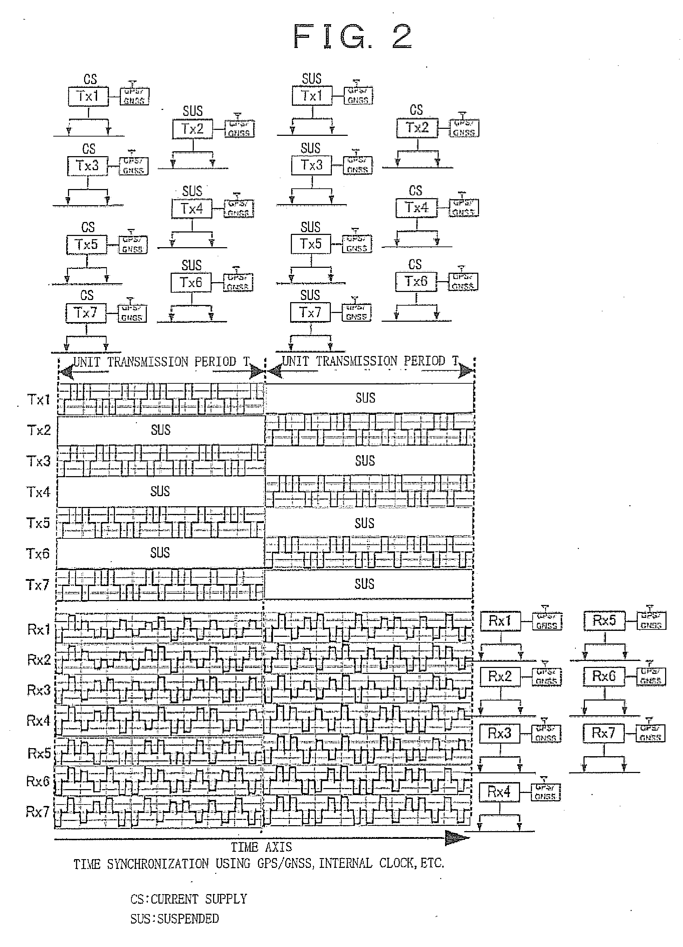

Figure 2 illustrates results of measurement of response potential waveforms in the resistivity method as to the distributed survey system that includes seven current supply points TX and seven measurement points RX. In the embodiment, first the currents are supplied from the current supply points TX1, 3, 5 and 7 to measure the response waveforms at all of the measurement points RX, and next, the currents are supplied from TX2, 4 and 6 to measure the response waveforms at all of the measurement points RX. Notably, all of the amplitudes in this current supply are the same.

Moreover, in the distributed survey system described above, when the currents are supplied from the current supply points TX of the plurality of survey units using codes with which the covariances become zero, the currents may be supplied with various amplitudes at each current supply point. Namely, as mentioned above, the currents with the same amplitude are sometimes not easy to be supplied in the distributed survey system, for the reason that, for example, ground resistances in the region of distribution are largely different from one another.

Meanwhile, since the conditions under which the covariances of the waveforms of the supply currents are zero are retained in principle even when the amplitudes of the supply currents are different, the current values different depending on the current supply points are also applicable. Nevertheless, in such a case, a method taking account of this in the stage of performing the arithmetic processing is needed to be taken. Since the amplitude of the supply current can be accurately obtained by recording the current supply waveform, as mentioned below, the arithmetic processing is performed using the current value multiplied by a ratio of the amplitude of a specific supply current to the amplitude of another supply current and the potential values measured with respect to the individual supply currents at the measurement points RX, and thus correct results can be obtained.

First, when the current waveform allowed to flow from the ith current supply point is defined as $S_{ij}$, the potential response with respect thereto as $R_i$, and the potential waveform observed at the jth potential observation point as $P_j$, $P_j$ is expressed as the following expression.

[Expression 1]

$$P_j = \sum_{i=1}^{m} R_i \cdot S_{ij} \tag{1}$$

Here, as indicated in the following expression, the covariance Ci between the potential waveform $P_j$ observed at the measurement point RX and the supply current waveform $S_{ij}$ can be obtained from the sum total of the products of the potential waveform $P_j$ and the supply current waveform $S_{ij}$ from each of which each average is subtracted.

[Expression 2]

$$Ci = \sum_{j=1}^{n} \left\{ \left( P_j - \bar{P} \right) \left( S_{ij} - \overline{Si} \right) \right\} \tag{2}$$

In order to represent that this is different depending on the current supply point TX, an element of the unit vector is represented by a small letter $s_{ij}$, and the amplitude of the current at the current supply point i is represented by $a_i$, and thus, $s_{ij}$ can be expressed as the following expression.

[Expression 3]

$$S_{ij} = a_i \cdot s_{ij} \tag{3}$$

Substitution of expression (3) for expression (2) gives:

[Expression 4]

$$C_i = \sum_{j=1}^{n} \left\{ \left( P_j - \bar{P} \right) \left( a_i \cdot s_{ij} - \overline{a_i s_i} \right) \right\} \tag{4}$$

[Expression 5]

$$C_i = a_i \sum_{j=1}^{n} \left\{ \left( P_j - \bar{P} \right) \left( s_{ij} - \overline{s_i} \right) \right\} \tag{5}$$

Moreover, expression (1) can be rewritten as follows.

[Expression 6]

$$P_j = \sum_{i=1}^{m} a_i \cdot R_i \cdot s_{ij} \tag{6}$$

Substitution of expression (6) for expression (5) gives:

[Expression 7]

$$C_i = a_i \sum_{j=1}^{n} \left\{ \left( \sum_{k=1}^{m} a_k \cdot R_k \cdot (s_{kj} - \overline{s_k}) \right) (s_{ij} - \overline{s_i}) \right\} \tag{7}$$

In expression (7), since the covariance between the current supply waveforms is zero, only the case of k = i remains to give Ci as follows.

[Expression 8]

$$C_i = a_i^{-2} R_i \sum_{j=1}^{n} \left( s_{ij} - \bar{s}_i \right)^2 \qquad (8)$$

Accordingly,
**[0055]** [Expression 9]

$$R_i = \frac{C_i}{a_i^{-2} \sum_{j=1}^{n} \left( s_{ij} - \bar{s}_i \right)^2} \qquad (9)$$

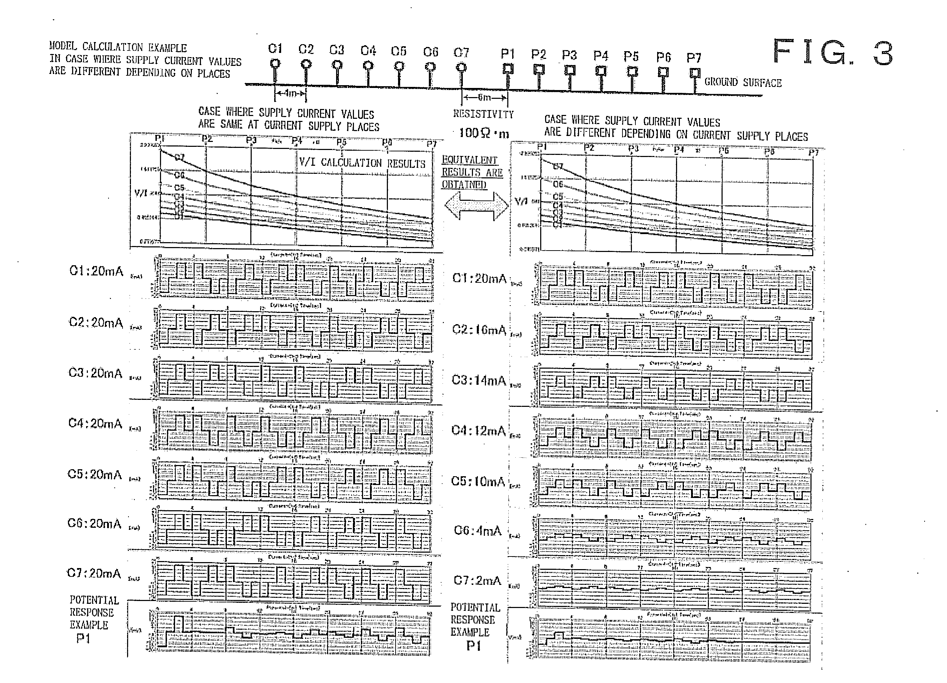

Figure 3 illustrates model calculation results with which the case where the supply current values from the current supply points TX are the same and the case where the supply current values are different depending on the current supply points TX are compared in electrical survey based on multi-point simultaneous current supply. In the model calculation here, the resistivity of the ground is uniform to be 100 $\Omega \cdot$m, and the case where the currents are simultaneously supplied from all of the seven current supply points TX with a current value 20 mA used equally and the case where different current values of 20 mA, 16 mA, 14 mA, 12 mA, 10 mA, 4 mA and 2 mA are used from the individual current supply points TX are compared. From the results, it is apparent that also in the case where the different supply current values are used at the individual current supply points TX, as the values of $R_i$ (V/I) thus obtained, the equivalent results can be obtained.

Next, another embodiment of the distributed survey method according to the present invention for measuring the underground IP effect in the induced polarization method using the distributed survey system having the configuration above is described.

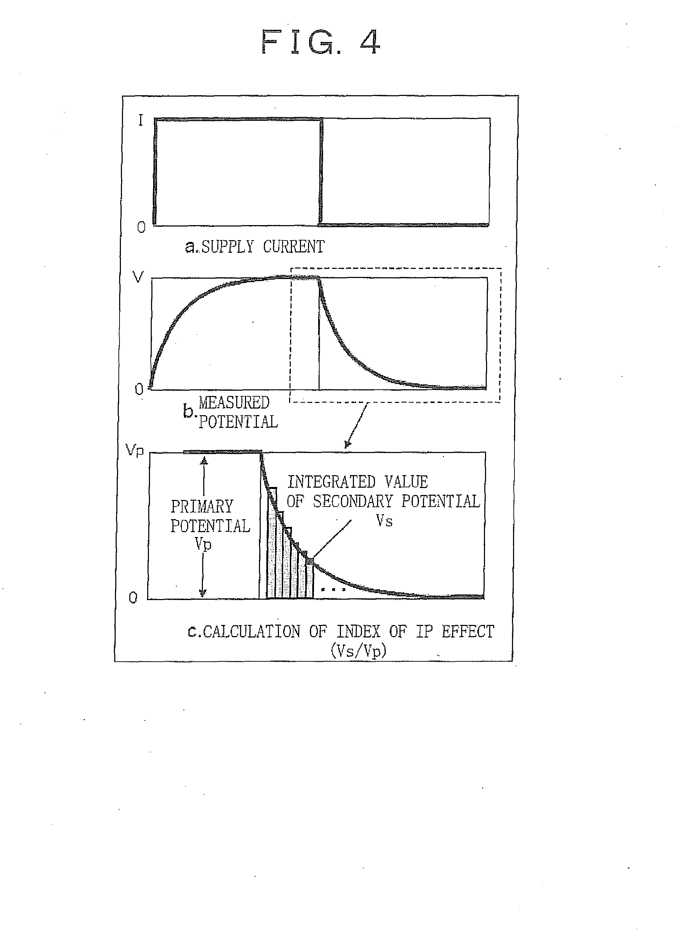

First of all, as illustrated in [Figure 4, as a conventional technology of measuring the IP effect which is one of the underground electrical characteristics, there is a method of obtaining its index from the response of the measured potential after the current allowed to flow underground is shut off.

Namely, as illustrated in Figure 4(at "a"), when the current is allowed to flow underground for a certain time, the potential measured at a certain point gradually comes close to a certain voltage (primary potential) as illustrated in Figure 4 (at "b"). Then, when the current is shut off after the potential comes close to the certain potential, the potential exponentially attenuates. As a value characterizing the attenuation shape in this stage, the value of integration of the attenuation section (secondary potential) is obtained, and by dividing this by the primary potential, the index called the charging rate is obtained.

Here, in the conventional technology, since the current supply point is limited to one, the measured potential is apparent to be the response with respect to the relevant current supply, and therefore, the charging rate can be calculated only by watching the measured potential.

Nevertheless, in the distributed survey system, since the currents are required to be simultaneously supplied at an arbitrary plurality of current supply points TX, such calculation cannot be performed.

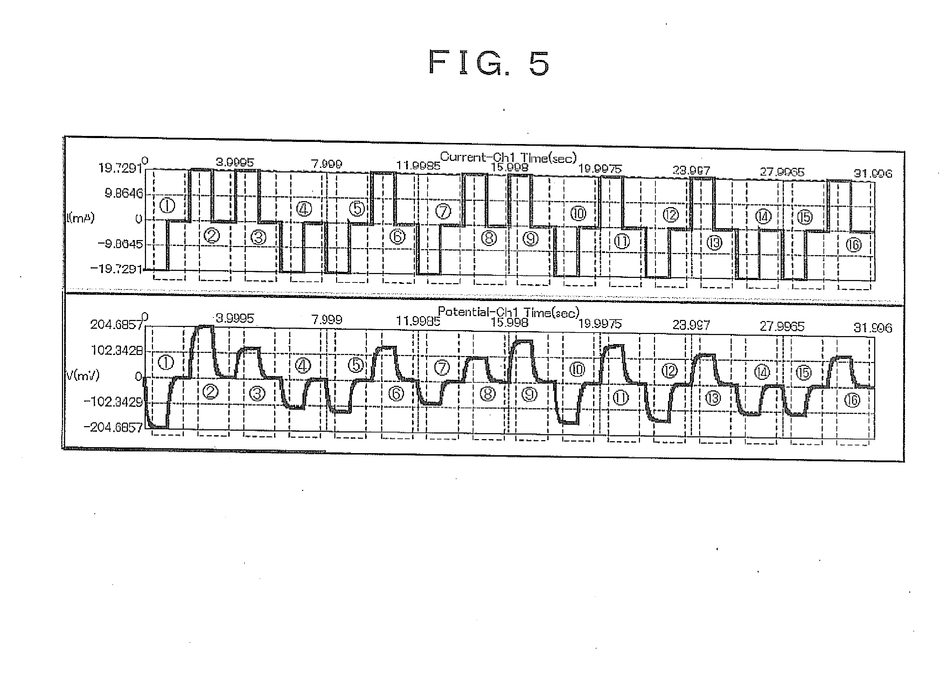

Furthermore, in the distributed survey system, as illustrated in Figure 5, in order that the currents are simultaneously supplied at the plurality of current supply points for the measurements, the current waveforms encoded so as to yield the covariances of zero from the different current supply points TX are used, and the calculation is performed based on the arithmetic processing with the measured potential waveforms thus obtained. In such a current waveform, as presented in the embodiment, when the covariances between the currents and the potentials are calculated for obtaining the resistivities, although the covariances are zero in the portions where the current values are zero, this does not interfere with obtaining the values of the resistivities.

On the contrary, in the distributed survey method according to the embodiment, as to the charging rate which is the index of the IP effect, the potential responses in the portions where the supply currents are zero are important, and any technique of simply calculating the covariances is not applicable. Notably, the calculation target in the occasion when the index of the IP effect is obtained is the vicinity of shutting off the supply current, and, for example, there are 16 places in the waveform illustrated in Figure 5.

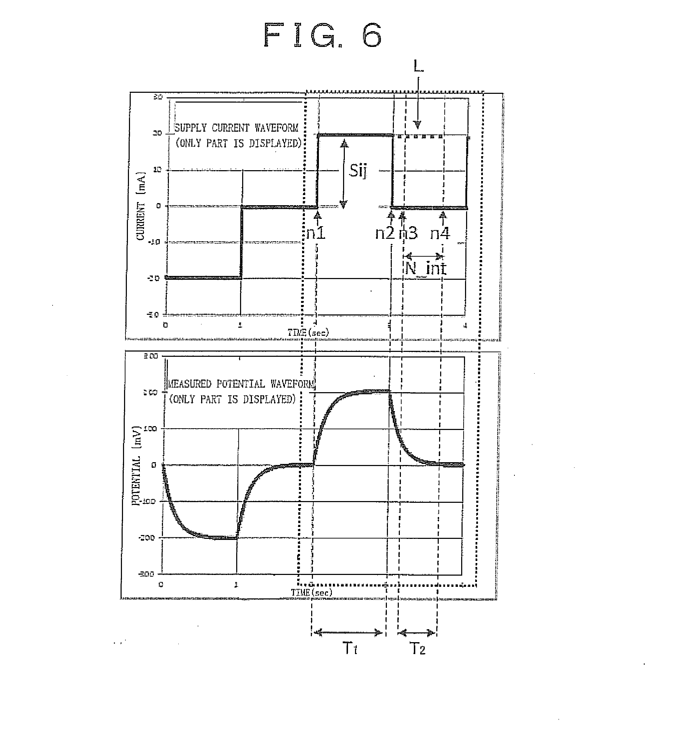

Therefore, in the embodiment, as illustrated in Figure 6, with respect to the period of one time of current supply and current shutoff, first, the covariance value Cik(A) between the current value and the measured potential in the current supply is obtained. Moreover, after the current shutoff, in the section L indicated by the broken line in the figure where the potential response after the current shutoff continues, supposing that the current value immediately before is maintained to perform the current supply, the covariance value Cik(B) between the current value and the measured voltage is obtained.

Namely, in the supply current section $T_1$ in the figure, the covariance value Cik(A) is expressed as the following expression.

[Expression 10]

$$\mathrm{Cik}(A) = \sum_{j=n1}^{n2} \left\{ \left( P_j - \bar{P} \right) \left( S_{ij} - \bar{S}i \right) \right\}$$

Next, in the IP effect section $T_2$ therein, the covariance value Cik(B) is expressed as the following expression.

[Expression 11]

$$\mathrm{Cik}(B) = \sum_{j=n3}^{n4} \left\{ \left( P_j - \bar{P} \right) \left( S_{ij-N\_int} - \bar{\bar{S}}i \right) \right\}$$

Notably, Si in the calculation expression represents the average value over the entire target sections.

Moreover, for each section, the position (n1, n3) with which the calculation is started and the position (n2, n4) with which it is ended can be changed depending on the situation of the waveform and the like.

Then, as above, Cik(A) and Cik(B) are calculated for the entire target sections, and as indicated in the following expression, the results are added together.

[Expression 12]

$$\mathrm{Ci}(B) = \Sigma\, \mathrm{Cik}(B),\ \ \mathrm{Ci}(A) = \Sigma\, \mathrm{Cik}(A)$$

Then, the index $M_i$ of the IP effect can be obtained by the ratio of these as indicated in the following expression.

[Expression 13]

$$Mi = Ci(B)/Ci(A)$$

Herein, the suffix i designates the ith current supply point.

As describe above, according to the distributed survey system, for obtaining underground electrical characteristics, having the configuration above and the distributed survey method using the same, since the currents with the waveforms so as to yield the covariances of zero between the current supply waveforms are supplied from the plurality of current supply points TX, from the response potential waveforms observed at the plurality of measurement points RX, the responses with respect to the currents from the respective current supply points can be easily obtained. As a result, the measurement time can be largely reduced, leading to excellent operation efficiency.

In addition to the above, the plurality of survey units (1, 2, 3,...(N-1), N) are distributed across the region in which the underground electrical characteristics are to be obtained, each survey unit including: at least one current supply point TX and the current supply means for supplying the current underground therefrom; and/or at least one measurement point RX and the measurement means for measuring the response signal in response to the current supply from each measurement point RX, and the current supply means and the measurement means of the plurality of survey units are synchronized by the synchronization control means to be operated. Hence, even in the case where underground electrical characteristics are surveyed across a wide range and the case where there are obstacles such as a mountainous area and a lake in the survey region, the relevant region can be surveyed with the survey units being simultaneously installed.

According to the invention described above, the underground electrical characteristics in a wide-range region can be efficiently surveyed in a short time, excluding a wasteful standby time. In addition to this, the configuration and arrangement of each survey unit (1, 2, 3,...(N-1), N) are properly selected, and thereby, the survey purposes, the geographical conditions in the survey region and the like can be flexibly handled.

Furthermore, as illustrated in Figure 3, in the case where the supply currents with different amplitudes from the current supply points TX are used, when the charging rate is obtained, based on $V_{p2}/V_{p1} = (I_2/I_1)^2$, the obtained primary potential is proportional to the square of the ratio between the supply currents. Accordingly, the square of the ratio between the supply currents is used as a correction factor or the ratio of the secondary potential integrated value with respect to the primary potential integrated value is obtained as in the conventional known technology. Thus, even in the case where the supply currents are different, they can be evaluated as the normalized values.

Industrial Applicability

According to the present invention, there can be provided a distributed survey system for obtaining underground electrical characteristics and a distributed survey method using the same which can be flexibly compatible with the survey purposes, the geographical conditions of the survey region and the like, and therefore, can obtain the underground electrical characteristics more efficiently and in a shorter time than conventionally, and which can be compatible with the induced polarization method, the electromagnetic method and the like as well as the resistivity method.

Reference Signs List

TX    Current supply point
RX    Measurement point

**Claims**

1.  A distributed survey system for obtaining underground electrical characteristics, wherein
    a plurality of survey units are distributed across a region in which underground electrical characteristics are to be obtained, each survey unit including at least one current supply point and current supply means for supplying a current underground from the relevant current supply point; and/or at least one measurement point and measurement means for measuring a response signal in response to the current supply from each measurement point, and synchronization control means is disposed in each of the survey units, the synchronization control means exerting control to supply currents with waveforms encoded so as to yield covariances of zero from the plurality of current supply points, and controlling the measurement means to measure the response signals in response to the relevant current supply, while synchronizing operation of the current supply means with the measurement means.

2.  The distributed survey system according to Claim 1 for obtaining underground electrical characteristics, wherein
    the synchronization control means controls, at least after the current supply means in at least one of the survey units completes the current supply and current shutoff for a unit transmission period, the current supply means in another of the survey units to perform current supply operation.

3.  A distributed survey method for obtaining underground electrical characteristics, wherein
    using the distributed survey system according to Claim 1 or 2 for obtaining electrical characteristics, the current supply means and the measurement means which are synchronized by the synchronization control means obtain the underground electrical characteristics in a resistivity method, an induced polarization method or an electromagnetic method.

4.  The distributed survey method according to Claim 3 for obtaining electrical characteristics, wherein
    the currents with different amplitudes are supplied from at least two of the current supply points of the survey units, and using a current value multiplied by a ratio of the amplitude of a specific one of the currents to the amplitude of another of the currents and potential values measured with respect to the respective currents at the measurement points, the underground electrical characteristics are obtained in the resistivity method.

5.  The distributed survey method according to Claim 3 for obtaining underground electrical characteristics, wherein
    with respect to a plurality of times of the current supply and the current shutoff performed for the unit transmission period, a covariance value Cik(A) between the current value and a measured voltage in the relevant current supply of the current supply and the current shutoff is obtained at each time of the current supply and the current shutoff, supposing that the current supply is being performed although the actual current is shutoff, a covariance value Cik(B) between the current value and the measured voltage is obtained, the covariance values Cik(A) and Cik(B) are added together across an entire section in the unit transmission period, and an index Mi of an IP effect in the induced polarization method is obtained from a ratio Ci(B)/Ci(A) between the obtained covariance values.

FIG. 1

# FIG. 2

TIME SYNCHRONIZATION USING GPS/GNSS, INTERNAL CLOCK, ETC.

CS:CURRENT SUPPLY
SUS:SUSPENDED

# FIG. 3

MODEL CALCULATION EXAMPLE
IN CASE WHERE SUPPLY CURRENT VALUES
ARE DIFFERENT DEPENDING ON PLACES

C1 C2 C3 C4 C5 C6 C7　P1 P2 P3 P4 P5 P6 P7

|←4m→|　　　　　　　　|←6m→|　　　　GROUND SURFACE

CASE WHERE SUPPLY CURRENT VALUES
ARE SAME AT CURRENT SUPPLY PLACES

RESISTIVITY
100 Ω·m

CASE WHERE SUPPLY CURRENT VALUES
ARE DIFFERENT DEPENDING ON CURRENT SUPPLY PLACES

V/I CALCULATION RESULTS

EQUIVALENT
RESULTS ARE
OBTAINED

C1:20mA
C2:20mA
C3:20mA
C4:20mA
C5:20mA
C6:20mA
C7:20mA
POTENTIAL
RESPONSE
EXAMPLE
P1

C1:20mA
C2:16mA
C3:14mA
C4:12mA
C5:10mA
C6:4mA
C7:2mA
POTENTIAL
RESPONSE
EXAMPLE
P1

EP 2 957 930 A1

# FIG. 4

a. SUPPLY CURRENT

b. MEASURED POTENTIAL

PRIMARY POTENTIAL Vp

INTEGRATED VALUE OF SECONDARY POTENTIAL Vs

c. CALCULATION OF INDEX OF IP EFFECT (Vs/Vp)

FIG. 5

# F I G. 6

# FIG. 7

EP 2 957 930 A1

<div align="center">

**INTERNATIONAL SEARCH REPORT**

</div>

| | International application No. |
|---|---|
| | PCT/JP2014/000574 |

**A. CLASSIFICATION OF SUBJECT MATTER**
*G01V3/02*(2006.01)i

According to International Patent Classification (IPC) or to both national classification and IPC

**B. FIELDS SEARCHED**

Minimum documentation searched (classification system followed by classification symbols)
G01V3/02

Documentation searched other than minimum documentation to the extent that such documents are included in the fields searched
Jitsuyo Shinan Koho      1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)
JSTPlus(JDreamIII)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2008-304343 A  (Yugen Kaisha Chiken Tansa Gijutsu Kenkyusho),<br>18 December 2008 (18.12.2008),<br>entire text; all drawings<br>& US 2010/0171486 A1    & EP 2157447 A1<br>& WO 2008/149774 A1 | 1,3<br>2,4,5 |
| Y<br>A | JP 2010-156695 A  (Novatel Inc.),<br>15 July 2010 (15.07.2010),<br>paragraphs [0004] to [0009]<br>& WO 2005/008288 A1 | 1,3,<br>2,4,5 |
| A | JP 2000-513809 A  (Fox, Anthony, Charles, Leonid),<br>17 October 2000 (17.10.2000),<br>entire text; all drawings<br>& US 6191587 B1            & WO 1997/041457 A1 | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    21 April, 2014 (21.04.14) | Date of mailing of the international search report<br>    13 May, 2014 (13.05.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/000574

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-508205 A  (Advanced Hydrocarbon Mapping A/S),<br>10 March 2011 (10.03.2011),<br>entire text; all drawings<br>& US 2010/0271029 A1    & EP 2232302 A<br>& WO 2009/082236 A1 | 1-5 |

Form PCT/ISA/210 (continuation of second sheet) (July 2009)

**EP 2 957 930 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008304343 A